# EUROPEAN PATENT APPLICATION

(11) **EP 1 898 389 A1**
(43) Date of publication of application: **12.03.2008**
(21) Application number: 07115982.6
(22) Date of filing: 10.09.2007
(51) Int. Cl.: G09G 3/20

(54) **Flat panel display device**

(30) Priority: 11.09.2006 KR 20060087396
(71) Applicant: Samsung SDI Co., Ltd., Suwon-si Gyeonggi-do (KR)
(72) Inventor: Kim, Shawn, Gyeonggi-do (KR); Jung, Yeong-shil, Gyeonggi-do (KR); Song, Mi-kyung, Gyeonggi-do (KR); Im, Tae-won, Gyeonggi-do (KR); Lee, Hyung-woo, Gyeonggi-do (KR); Lee, Jae-hoon, Gyeonggi-do (KR); Kim, Tae-soo, Gyeonggi-do (KR)
(74) Representative: Hengelhaupt, Jürgen

(57) **Abstract**

The present invention relates to a flat panel display device comprising lower and upper substrates (10,40,100,200) facing each other and having a pixel area (20,114) including a plurality of pixels and a non-pixel area (30,116) surrounding the pixel area. The flat panel display further includes a driving circuit (60,140) for controlling display of images on the plurality of pixels, wherein the driving circuit (60,140) is coupled to the plurality of pixels through a plurality of signal wirings (12,14,122,124). The flat panel display device is characterized in that it further comprises a shield wiring (70,170) arranged in the non-pixel area (30,116) and electrically coupled to a ground.

## Description

### BACKGROUND OF THE INVENTION

### 1. Field of the Invention

The present invention relates to a flat panel display device.

### 2. Description of the Related Art

A liquid crystal display (LCD) having excellent color reproduction and low power consumption can be manufactured with low thickness. Further, an organic light emitting diode (OLED) display, considered as a next generation display device having a self light emitting property, has better properties in terms of field of view, contrast, response time, power consumption, etc., than those of LCDs, and can be manufactured with light weight and low thickness since it does not require a backlight.

In general, an LCD is composed of a liquid crystal display panel, a backlight positioned behind the liquid crystal display panel and used as a light source, and a driving circuit for driving the liquid crystal display panel.

A liquid crystal display panel includes two substrates arranged opposite to each other and a liquid crystal layer injected into the space between the two substrates, and pixels are defined by electrodes arranged in a matrix array on the two substrates.

The driving circuit converts electric signals provided from the outside into scanning signals and data signals to drive the respective pixels selectively. The driving circuit is arranged on the substrate during manufacturing of the elements, or manufactured as a driving circuit chip (i.e., a drive IC) to be mounted on the substrate via a tape automated bonding (TAB) or a chip on glass (COG) method. The electric signals are provided through a flexible printed circuit (FPC) in the form of film electrically coupled with a pad unit connected with the driving circuit.

However, since such flat panel display device is composed of glass substrates, electrostatic discharges (ESD) occur frequently during the manufacturing process or during the use of the flat panel display device. If an electrostatic discharge is applied to the liquid crystal layer or the driving circuit that operates at high speed with low voltage, such flat panel display device may malfunction or be damaged by electric influence. That is, if the externally occurring electrostatic discharge is applied to the driving circuit through the internal wiring, the operation of a driving voltage generation unit is suspended for an instant to generate vertical or horizontal lines and, furthermore, if the occurrence frequency of the electrostatic discharge or the applied voltage is increased, the circuit wiring may be disconnected or short-circuited, or insulation layer may be destroyed, thus causing a white defect. Such damages caused by the electrostatic discharge occur more seriously as the driving circuits become increasingly highly integrated (e.g., miniaturized).

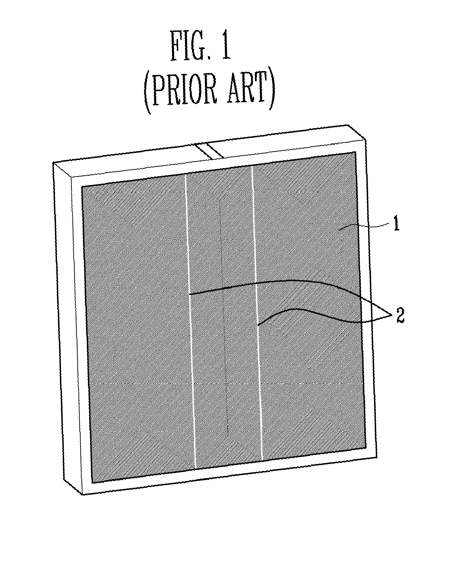

Fig. 1 depicts a vertical line 2 defect of a conventional liquid crystal display panel 1, in which such vertical lines 2 occur symmetrically with respect to a liquid crystal injection opening as the electrostatic discharge is applied through the liquid crystal injection opening sealed by a material having a relatively low resistance.

To prevent the damages caused by the electrostatic discharge, an element for discharging high voltages or a protection circuit was added to the display panel in the past, however, such element or protection circuit was designed primarily to prevent the electrostatic discharge occurring during the manufacturing process and was typically not helpful in preventing damages occurring during the use of the flat panel display device.

### SUMMARY OF THE INVENTION

An aspect according to an exemplary embodiment of the present invention is to provide a flat panel display device that can protect a driving circuit from electrostatic discharges (ESD).

Another aspect according to an exemplary embodiment of the present invention is to provide a flat panel display device that can prevent damages caused by an electrostatic discharge, without adding a separate element or a protection circuit for preventing the electrostatic discharge.

The present invention relates to a flat panel display device comprising lower and upper substrates facing each other and having a pixel area including a plurality of pixels and a non-pixel area surrounding the pixel area. The flat panel display further includes a driving circuit for controlling display of images on the plurality of pixels. The driving circuit is coupled to the plurality of pixels through a plurality of signal wirings. The flat panel display device is characterized in that it further comprises a shield wiring arranged in the non-pixel area and electrically coupled to a ground.

Preferably, the shield wiring, the plurality of signal wirings and the driving circuit are on the lower substrate.

According to another preferred embodiment of the invention, the shield wiring is formed along the periphery of the pixel area at at least three of four sides of the pixel area.

Preferably, the flat panel display is a liquid crystal display (LCD) or an organic light emitting diode display (OLED display).

The shield wiring is preferably formed of a material which has a lower or the same specific resistance value than a material used for forming the signal wirings.

### BRIEF DESCRIPTION OF THE DRAWINGS

These and/or other features and aspects of the invention will become apparent and are more readily appreciated from the following description of exemplary embodiments, taken in conjunction with the accompanying drawings of which:

Fig. 1 is a perspective view illustrating a display defect of a conventional liquid crystal display device caused by an electrostatic discharge;

Fig. 2 is a plan view illustrating a flat panel display device in accordance with a first exemplary embodiment of the present invention;

Fig. 3 is one exemplary schematic sectional view of the flat panel display device depicted in Fig. 2;

Fig. 4 is a plan view illustrating a flat panel display device in accordance with a second exemplary embodiment of the present invention; and

Fig. 5 is one exemplary schematic sectional view of the flat panel display device depicted in Fig. 4.

### DETAILED DESCRIPTION

The embodiments of the present invention will now be described more fully hereinafter with reference to the accompanying drawings, in which exemplary embodiments of the invention are shown. This invention may, however, be embodied in many different forms and should not be construed as limited to the embodiments set forth herein.

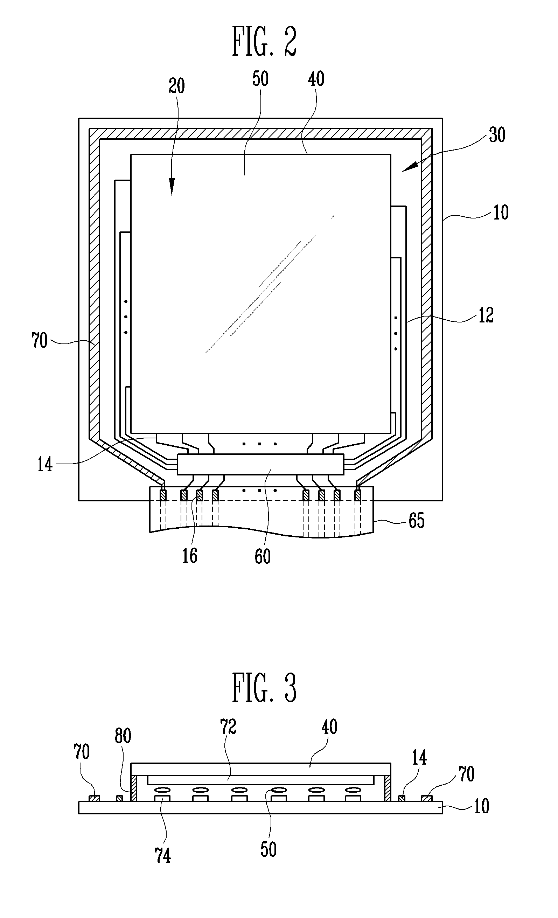

Fig. 2 is a plan view illustrating a flat panel display device in accordance with a first exemplary embodiment of the present invention, and Fig. 3 is one exemplary sectional view, in which a flat panel display device is depicted schematically. The flat panel display device includes a display panel, including two substrates 10 and 40 and a liquid crystal layer 50 between the two substrates 10 and 40, and a driving circuit 60 for driving the display panel.

A lower substrate 10 includes a pixel area 20 (or display region) and a non-pixel area 30 (or non-display region). In the pixel area 20, a plurality of segment electrodes is formed in case of a super twisted nematic liquid crystal display (STN-LCD), or a plurality of pixel electrodes and a plurality of thin film transistors (TFTs) for controlling the operations of the respective pixels are arranged in case of a thin film transistor-liquid crystal display (TFT-LCD).

The non-pixel area 30 includes a peripheral region of the pixel area 20, e.g., an area outside of (or surrounding) the pixel area 20, and includes wirings 12 and 14 coupled with electrodes 72, 74 in the pixel area 20, a driving circuit 60 coupled with the electrodes in the pixel area 20 through the wirings 12 and 14, a shield wiring 70 arranged along the edge (or periphery), and a pad unit 16 coupled with the driving circuit 60 and the shield wiring 70. The driving circuit 60 is arranged on the substrate while manufacturing the elements, or manufactured as a driving circuit chip (i.e., a drive IC) to be mounted on the substrate via a tape automated bonding (TAB) or chip on a glass (COG) method. In FIGs. 2 and 3, reference numeral 12 denotes scan lines and reference numeral 14 denotes data lines.

An upper substrate 40 is made of transparent glass or any other suitable material, and includes a plurality of common electrodes arranged in the region opposite to (i.e., facing) the pixel area 20.

The upper substrate 40 is arranged on the top of the lower substrate 10 so that the above-mentioned electrodes cross with each other. A sealed space is formed between the lower substrate 10 of the pixel area 20 and the upper substrate 40 using a sealing material 80 interposed between the lower and upper substrates 10 and 40. Here, the common electrodes of the upper substrate 40 are electrically coupled with the wirings of the lower substrate 10.

A plurality of pixels is defined by electrodes arranged in a matrix array on the lower and upper substrates 10 and 40, and a liquid crystal layer 50 is injected into the sealed space between the substrates.

The pad unit 16 of the flat panel display device configured as above is electrically coupled with a flexible printed circuit (FPC) 65 in the form of film. Signals from the outside are provided to the flat panel display device through the pad unit 16. The signals including power supply voltage, control signal, data, etc., are input to the pad unit 16 electrically connected with the driving circuit 60, and the pad unit 16 coupled with the shield wiring 70 is electrically connected to ground.

When a signal is input to the driving circuit 60 in a state where the shield wiring 70 is connected to ground through the FPC 65, the driving circuit 60 generates scanning signals and data signals to transmit the signals to the corresponding scan lines 12 and data lines 14, respectively. Accordingly, light corresponding to the data signals is emitted by a liquid crystal array of pixels selected by the scanning signals.

The flat panel display device in accordance with an exemplary embodiment of the present invention includes the shield wiring 70 arranged along the edge (or periphery) of the lower substrate 10. At least one side (or at least one end) of the shield wiring 70 is electrically connected to ground. In the described embodiment, the shield wiring 70 is formed to at least partly surround (e.g., formed along three of the four sides) the wirings 12 and 14 and the driving circuit 60. The shield wiring 70 may be formed with a material that has a specific resistance value lower than those of the wirings 12 and 14 or the same material as the wirings 12 and 14. In the described embodiment, the shield wiring 70 is formed wider than the wirings 12 and 14 so as to have a lower resistance. By way of example, the shield wiring 70 may be formed of indium tin oxide (ITO), indium tin zinc oxide (ITZO), indium zinc oxide (IZO), potassium tin oxide (PTO), antimony tin oxide (ATO), antimony zinc oxide (AZO), In₂O₃, SnO₂, ZnO, CdO, Cd₂SnO₄, Cd₂lnO₄, ln₄Sn₃O₁₂, etc., and be fabricated at the same time as the wirings 12 and 14 during the manufacturing process or be made during a separate manufacturing process. In other embodiments, the shield wiring 70 may be formed with metals, such as molybdenum (Mo), tungsten (W), titanium (Ti), aluminum (AI), etc., or their alloys, or in a stacked structure including two or more of these metals and/or other suitable materials,

Accordingly, if an electrostatic discharge is applied to the surface or the side of the display panel, the electrostatic discharge is dissipated to the outside ground through the shield wiring 70 having a resistance value lower than those of the electrodes or the wirings 12 and 14, thus substantially preventing the driving circuit from being damaged.

The flat panel display device manufactured in accordance with the first exemplary embodiment of the present invention was tested in contact and non-contact modes in full compliance with International Electrotechnical Commission (IEC) 1000-4-2 standard. The electrostatic discharges of ±8kV were applied to the flat panel display device of the first exemplary embodiment of the present invention ten times in the contact mode and the electrostatic discharges of ±15kV were applied ten times in the non-contact mode. During the test, no defect caused by the electrostatic discharges was found in the display panel or the driving circuit.

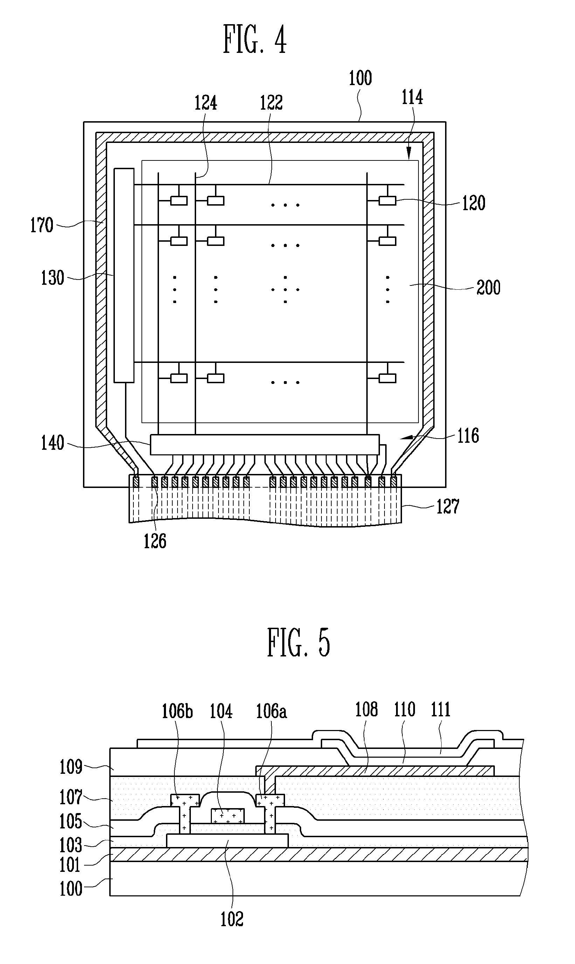

Fig. 4 is a plan view illustrating a flat panel display device in accordance with a second exemplary embodiment of the present invention, and Fig. 5 is a sectional view, in which an exemplary flat panel display device is depicted schematically. The flat panel display device includes a display panel, including two substrates 100 and 200, organic light emitting diodes 120 located between the two substrates 100 and 200, and driving circuits (or driving units) 130 and 140 for driving the display panel. While the elements 120 are being referred to as organic light emitting diodes in reference to FIG. 4, the elements 120 in embodiments of the present invention (e.g., active matrix type display device) may be pixel circuits including organic light emitting diodes as well as other elements (e.g., TFTs) (see FIG. 5, for example).

A lower substrate 100 is composed of a pixel area 114 and a non-pixel area 116. In the pixel area 114, scan lines 122 (or signal lines) and data lines 124 (or signal lines) are arranged to cross each other and the organic light emitting diodes 120 are located at crossing regions of the scan lines 122 and the data lines 124 in a matrix array to configure pixels.

The non-pixel area 116 is a peripheral region of the pixel area 114, e.g., an area outside of (or surrounding) the pixel area 114, and includes the scan lines 122, the data lines 124, that are extended from the scan lines 122 and the data lines 124 of the pixel area 114, respectively, a power voltage supply line, which is not depicted in FIGs. 4 and 5, a scan driving unit 130, a data driving unit 140, coupled to the scan lines 122 and the data lines 124, respectively, a shield wiring 170 along the edge (or periphery), and a pad unit 126, coupled with the scan driving unit 130 and the data driving unit 140.

The scan driving unit 130 and the data driving unit 140 may be formed on the lower substrate 100 of the non-pixel area 116 during the process of manufacturing the organic light emitting diodes 120, or manufactured as a driving circuit chip (i.e., a drive IC) and mounted on the substrate 100 to be coupled with the scan lines 122 and the data lines 124 via a tape automated bonding (TAB), a chip on glass (COG) or a wire bonding method.

In a passive matrix type display device, the organic light emitting diodes 120 are coupled between the scan lines 122 and the data lines 124 in a matrix array, whereas, in an active matrix type display device, the organic light emitting diodes 120 are connected between the scan lines 122 and data lines 124 in a matrix array, and thin film transistors (TFTs) for controlling the operations of the organic light emitting diodes 120 and capacitors for maintaining the signal are further included.

Fig. 5 is a sectional view for illustrating one of the organic light emitting diodes (or pixel circuits) 120 in more detail, in which an active matrix type OLED display is schematically depicted.

A buffer layer 101 is formed on the lower substrate 100, and a semiconductor layer 102 providing an active layer is formed on the buffer layer 101. The semiconductor layer 102 provides a source area, a drain area and a channel area for a thin film transistor. A gate insulating film 103 is formed on the overall top surface including the semiconductor layer 102, and a gate electrode 104 is formed on the gate insulating film 103 on the top of the semiconductor layer 102. An interlayer insulating film 105 is formed on the overall top surface including the gate electrode 104, and contact holes are formed via the interlayer insulating film 105 and the gate insulating film 103 to expose specific parts of the semiconductor layer 102. A source electrode 106a and a drain electrode 106b connected with the semiconductor layer 102 through the contact holes are provided on the interlayer insulating film 105, and a planarization layer 107 is formed on the overall top surface including the source and drain electrodes 106a and 106b. A via hole is established via the planarization layer 107 to expose the source electrode 106a or the drain electrode 106b, and an anode electrode 108 coupled with the source electrode 106a or the drain electrode 106b through the via hole is provided on the planarization layer 107. Moreover, a pixel defining film 109 for exposing the anode electrode 108 in the light emitting region is formed on the planarization layer 107, and an organic thin film layer 110 and a cathode electrode 111 are provided on the exposed anode electrode 108. The organic thin film layer 110 may be formed having a structure where a hole transfer layer, an organic emission layer and an electron transfer layer are stacked, in which a hole injection layer and an electron injection layer may be further included.

In the organic light emitting diode 120 configured as above, when suitable voltages (e.g., predetermined voltages) are applied to the anode electrode 108 and the cathode electrode 111, holes injected from the anode electrode 108 and electrons injected from the cathode electrode 111 are coupled with each other in the organic thin film layer 110, thus emitting light by the energy difference generated during the coupling process.

A sealed space is formed between the lower substrate 100 of the pixel area 114 and the upper substrate 200 using a sealing material, which is not depicted in FIGs. 4 and 5, interposed between the lower substrate 100 and the upper substrate 200 facing the lower substrate 100.

The pad unit 126 of the flat panel display device in accordance with an exemplary embodiment of the present invention is electrically coupled with a flexible printed circuit (FPC) 127 in the form of film, through which signals including power supply voltage, control signal, data, etc., are input from the outside. In one embodiment, the pad unit 126 (i.e., one of the contacts/terminals of the pad unit 126) coupled with the shield wiring 170 is electrically connected to ground.

When signals are input to the scan driving unit 130 and the data driving unit 140 in a state where the shield wiring 170 is connected to ground through the FPC 127, the scan driving unit 130 and the data driving unit 140 generate scanning signals and data signals to transmit the signals to the corresponding scan line 122 and data line 124, respectively. Accordingly, light corresponding to the data signals are emitted by the organic light emitting diodes 120 selected by the scanning signals.

The flat panel display device in accordance with an exemplary embodiment of the present invention includes the shield wiring 170 arranged along the edge (or periphery) of the lower substrate 100 and at least one side (or at least one end) of the shield wiring 170 is connected to ground. Here, the shield wiring 170 is formed to at least partly surround (e.g., formed along three of the four sides) the scan lines 122, the data lines 124, the scan driving unit 130 and the data driving unit 140. The shield wiring 170 may be formed with a material that has a specific resistance value lower than those of the scan line 122 and the data line 124 or the same material as the scan line 122 and the data line 124. In the described embodiment, the shield wiring 170 is formed wider than the scan line 122 and the data line 124 so as to have a lower resistance. For example, the shield wiring 170 may be formed with metals, such as molybdenum (Mo), tungsten (W), titanium (Ti), aluminum (Al), etc., or their alloys, or in a stacked structure including two or more of these metals and/or other suitable materials, and be fabricated at the same time as the scan lines 122 and the data lines 124 during the manufacturing process or be made during a separate manufacturing process.

Accordingly, if an electrostatic discharge is applied to the surface or the side of the display panel, the electrostatic discharge is dissipated to the outside ground through the shield wiring 170 having a resistance value lower than those of the scan line 122 and the data line 124, thus substantially preventing the driving circuit from being damaged.

As described in detail above, the present invention forms the shield wiring along the edge (or periphery) of the substrate and connects at least one side (or at least one end) of the shield wiring to ground. Accordingly, the electrostatic discharge is dissipated to the outside ground through the shield wiring having a resistance value lower than those of the electrodes or the wirings, thus preventing the display panel and the driving circuit from being damaged, to improve the durability. Moreover, the present invention does not require an additional element or a protection circuit for preventing electrostatic discharges, thus reducing the manufacturing cost as well as the volume of the device. Further, while the embodiments of the present invention are described primarily in reference to LCD and/or OLED displays, the principles of the present invention can be applied to any other suitable display devices.

## Claims

1. A flat panel display device comprising:
lower and upper substrates (10, 40, 100, 200) facing each other and having a pixel area (20, 114) including a plurality of pixels and a non-pixel area (30, 116) surrounding the pixel area (20, 114); and
a driving circuit (60, 140) for controlling display of images on the plurality of pixels, the driving circuit (60, 140) coupled to the plurality of pixels through a plurality of signal wirings (12, 14, 122, 124);
**characterized in that**
the flat panel display device further comprises a shield wiring (70, 170) arranged in the non-pixel area (30, 116) and electrically coupled to a ground.

2. The flat panel display device of claim 1, wherein the shield wiring (70, 140), the plurality of signal wirings (12, 14, 122, 124) and the driving circuit (60, 140) are on the lower substrate (10, 100).

3. The flat panel display device of claim 1 or 2, wherein the shield wiring (70, 140) is formed along the periphery of the pixel area (20, 114) at at least three of four sides of the pixel area (20, 114).

4. The flat panel display device of any of the preceding claims, wherein the flat panel display is a liquid crystal display (LCD) or an organic light emitting diode display (OLED display).

5. The flat panel display device of any of the preceding claims, wherein the shield wiring (70, 140) is formed of a material which has a lower or the same specific resistance value than a material used for forming the signal wirings (12, 14, 122, 124).
